(19) Europäisches Patentamt
European Patent Office
Office européen des brevets

(11) **EP 4 252 904 A1**

(12) **EUROPEAN PATENT APPLICATION**
published in accordance with Art. 153(4) EPC

(43) Date of publication:
**04.10.2023 Bulletin 2023/40**

(21) Application number: **21898549.7**

(22) Date of filing: **23.11.2021**

(51) International Patent Classification (IPC):
$B01J\ 23/00$ [(2006.01)]    $B01J\ 23/10$ [(2006.01)]
$B01J\ 23/75$ [(2006.01)]    $B01J\ 35/02$ [(2006.01)]
$B01J\ 35/10$ [(2006.01)]    $B01J\ 35/00$ [(2006.01)]
$B01J\ 37/03$ [(2006.01)]    $B01J\ 37/08$ [(2006.01)]
$B01J\ 37/00$ [(2006.01)]

(52) Cooperative Patent Classification (CPC):
**B01J 23/00; B01J 23/10; B01J 23/75; B01J 35/00; B01J 35/02; B01J 35/10; B01J 37/00; B01J 37/03; B01J 37/08; C25B 1/04; C25B 11/031; C25B 11/077; Y02E 60/36**

(86) International application number:
**PCT/KR2021/017252**

(87) International publication number:
**WO 2022/114723 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.11.2020 KR 20200158897**

(71) Applicant: **Hanwha Solutions Corporation Jung-gu Seoul 04541 (KR)**

(72) Inventors:
- **KIM, Gil Ho**
  **Daejeon 34128 (KR)**
- **ROH, Chi Woo**
  **Daejeon 34128 (KR)**
- **SONG, Kyu Ho**
  **Daejeon 34128 (KR)**

(74) Representative: **Berggren Oy**
**P.O. Box 16**
**Eteläinen Rautatiekatu 10A**
**00101 Helsinki (FI)**

(54) **PEROVSKITE-BASED OXIDATION CATALYST FOR WATER ELECTROLYSIS OF ANION EXCHANGE MEMBRANE, AND METHOD FOR PREPARING OXIDATION CATALYST USING CO-PRECIPITATION METHOD**

(57) Provided are an oxidation catalyst for anion exchange membrane water electrolysis exhibiting excellent catalytic activity and electrical conductivity, a uniform particle size distribution and a large surface area, and excellent durability, and a preparation method thereof, an anode for anion exchange membrane water electrolysis and an anion exchange membrane water electrolysis system, each including the oxidation catalyst.

【FIG. 5A】

**EP 4 252 904 A1**

**Description**

[Field of the Invention]

Cross-reference to Related Application

The present application is based on, and claims priority from, Korean Patent Application No. 10-2020-0158897, filed on November 24, 2020, the disclosure of which is hereby incorporated by reference herein in its entirety.

The present invention relates to a perovskite-based oxidation catalyst for anion exchange membrane water electrolysis exhibiting excellent catalytic activity and electrical conductivity, a uniform particle size distribution and a large surface area, and excellent durability, and a method of preparing the oxidation catalyst using a co-precipitation method, an anode for anion exchange membrane water electrolysis and an anion exchange membrane water electrolysis system, each including the oxidation catalyst.

[BACKGROUND OF THE INVENTION]

Water electrolysis technology is a technology that produces hydrogen through electrical decomposition of water, and was created in the 1800s and has been used in commercial hydrogen production since the 1920s. Recently, as the need and share of renewable energy has significantly increased, the water electrolysis technology has attracted attention as a solution for low-carbon, green hydrogen production.

Current water electrolysis technologies mainly commercially applied include an alkaline water electrolysis (AWE) system and a proton exchange membrane water electrolysis (PEMWE) system.

Of them, the alkaline water electrolysis method uses inexpensive nickel-based electrodes and a porous membrane, and therefore, it can secure price competitiveness. However, due to a wide gap between porous diaphragms and electrodes, there are disadvantages in that an internal resistance is high and operation is only possible at a low current density. In addition, since the alkaline water electrolysis system has a large stack volume, high operating cost, and difficult rapid changes in current density due to the application of porous diaphragms, there are disadvantages in that it is difficult to apply in coupling with renewable energy sources such as wind power or solar heat, etc.

Meanwhile, the proton exchange membrane water electrolysis system is under development at the MW scale. This proton exchange membrane water electrolysis system can be driven with a high current density, and the compact design of the system is possible, and hydrogen to be produced has high purity, and an initial output pressure and a minimum load can be maintained low. In addition, the proton exchange membrane water electrolysis system is suitable for producing hydrogen in conjunction with renewable energy due to its fast response speed.

However, in the proton exchange membrane water electrolysis system, an expensive precious metal catalyst and a bipolar plate as a precious metal to prevent corrosion must be used, and therefore, there is a disadvantage in that the overall manufacturing cost greatly increases.

Accordingly, as a technology to replace the commercially applied alkaline water electrolysis system and proton exchange membrane water electrolysis system, an anion exchange membrane water electrolysis system has been currently proposed, and interest and research on the system have been greatly increased.

Compact design of this anion exchange membrane water electrolysis system is possible, and it is operated in the same atmosphere as the alkaline water electrolysis system, and therefore, it is possible to use non-precious metal materials. Accordingly, this anion exchange membrane water electrolysis system may be considered as a system that utilizes the advantages of the alkaline water electrolysis system and the proton exchange membrane water electrolysis system together.

However, in order to improve the performance of this anion exchange membrane water electrolysis system, it is required to use an oxidation catalyst exhibiting excellent electrical conductivity and catalytic activity and having high durability at an anode in which an oxygen evolution reaction involving a larger overpotential, for example, a reaction of the following Reaction Scheme occurs:

$$[\text{Reaction Scheme 1}] \qquad 4OH^- \rightarrow O_2 + 2H_2O + 4e^-$$

Considering that the anion exchange membrane water electrolysis system is operated at a low temperature of about 100°C or lower, a precious metal catalyst such as $IrO_2$ or $RuO_2$ has been considered as an oxidation catalyst that satisfies the above requirements. However, these precious metal catalysts are difficult to commercialize due to their high unit price, and it is difficult to utilize the advantages of anion exchange membrane water electrolysis system.

Accordingly, in recent years, studies have been continued to apply layered structure compounds (LDH; Layered double hydroxides), perovskite-based compounds, or spinel-based compounds as the oxidation catalyst. However, since the layered structure compounds and the spinel-based compounds have relatively high catalytic activity while having low electrical conductivity, they are unsuitable for use as the oxidation catalysts.

In contrast, perovskite-based compounds, which are oxides represented by a general formula of $ABO_3$ (wherein A is an alkaline earth metal or rare earth metal, B is a transition metal), may exhibit excellent catalytic activity because lattice oxygens reversibly participate in the oxygen evolution reaction, and may also exhibit excellent electrical conductivity through doping of various metal atoms.

However, the known perovskite-based compounds are mainly produced at a relatively high temperature over 1000°C by a solid-state reaction, and therefore, during this high-temperature reaction, the size of the compound particles increases and the surface area decreases. In many cases, the catalytic activity was reduced. In addition, the existing perovskite-based compounds do not have sufficient electrical conductivity and durability, and thus oxidation catalysts exhibiting excellent characteristics when applied to the anion exchange membrane water electrolysis system have not yet been properly developed.

Accordingly, there is a continuous demand for the development of a perovskite-based oxidation catalyst which may be prepared to have excellent catalytic activity, electrical conductivity, and durability and a large surface area.

[SUMMARY OF THE INVENTION]

[Technical Problem]

Accordingly, there are provided a perovskite-based oxidation catalyst for anion exchange membrane water electrolysis, which may be provided to have a uniform particle size distribution and a large surface area at a relatively low temperature and may have a plurality of oxygen vacancies, thereby exhibiting excellent catalytic activity, electrical conductivity, and durability, and a preparation method thereof.

There are also provided an anode for anion exchange membrane water electrolysis and an anion exchange membrane water electrolysis system, each including the oxidation catalyst.

[Technical Solution]

Accordingly, there is provided a perovskite-based oxidation catalyst for anion exchange membrane water electrolysis, the perovskite-based oxidation catalyst including a perovskite-based oxide of the following Chemical Formula 1:

[Chemical Formula 1]     $La_{1-x}Sr_xCoO_{3-y}$

in Chemical Formula 1, $0 \leq x \leq 1$, and $0 \leq y \leq 0.3$.

There is also provided a method of preparing the perovskite-based oxidation catalyst including the oxide of Chemical Formula 1, the method including the steps of:

forming a catalyst precursor by performing co-precipitation of lanthanum, strontium, and cobalt salts in the presence of a chelating agent in an aqueous solvent having a pH of 12 or more; and
forming the perovskite-based oxide of Chemical Formula 1 by sintering the catalyst precursor at a temperature of 500°C or higher.

There is also provided an anode for anion exchange membrane water electrolysis, the anode including:

a porous metallic structure; and
a catalyst layer including the perovskite-based oxidation catalyst, which is formed on the porous metallic structure.

There is also provided an anion exchange membrane water electrolysis system including:

an anion exchange membrane;
a cathode placed on one side of the anion exchange membrane; and
the anode placed on the other side of the anion exchange membrane such that the catalyst layer is brought into contact with the anion exchange membrane.

[BRIEF DESCRIPTION OF THE DRAWINGS]

FIGS. 1A to 1F show electron microscope (SEM) images of oxidation catalysts for anion exchange membrane water electrolysis, each prepared in Examples 1 to 6;

FIGS. 2A to 2E show electron microscope (SEM) images of oxidation catalysts for anion exchange membrane water electrolysis, each prepared in Examples 6 to 10 (FIG. 2A of Example 6 is shown in a different scale from FIG. 1F);

FIG. 3 shows an image for comparing the results of dispersing the oxidation catalysts of Examples 1 to 6 in a solvent;

FIG. 4A shows a comparison of the results of XRD analysis of the oxidation catalysts of Examples 1 to 6, and FIG. 4B shows an enlarged view of the XRD spectrum for the crystal structure analysis of the oxidation catalyst of Example 6;

FIG. 5A shows a linear sweep voltage (LSV) graph of measuring a current density ($mA/cm^2$) of the oxidation catalysts of Examples 1 to 6 in the voltage range of 1.2 V to 1.8 V, and FIG. 5B shows an LSV graph of measuring a current density ($mA/cm^2$) of the oxidation catalysts of Examples 6 to 10 in the voltage range of 1.2 V to 1.8 V;

FIG. 6 shows a graph showing the results of measuring Tafel slopes of the oxidation catalysts of Examples 6 to 10;

FIG. 7 shows a graph showing the results of measuring impedance of the oxidation catalysts of Examples 6 to 8 at 1.62 V;

FIGS. 8A to 8C show the results of evaluating durability of the oxidation catalyst by operating the oxidation catalyst of Example 7 for 1000 cycles by cyclic voltammetry (CV) and linear sweep voltammetry (LSV); and

FIGS. 9A and 9B shows graphs, each showing the result of measuring changes in the current density of an anion exchange mem brane water electrolysis system manufactured using the oxidation catalyst of Example 7, while increasing the voltage (FIG. 9A), and the resulting of measuring change in the voltage according to the operation time at a constant current density (FIG. 9B).

[Advantageous Effects]

A perovskite-based oxidation catalyst of the present invention may be prepared and provided by precisely controlling a composition of atomic members at a relatively low temperature by using a co-precipitation method. As a result, the oxidation catalyst of the present invention may be provided to have a smaller particle size and a uniform particle size distribution, and may have a larger surface area.

Further, the oxidation catalyst of the present invention may be prepared and provided to have a plurality of oxygen vacancies in the lattice structure by adjusting a content molar ratio of lanthanum and strontium. These oxygen vacancies may act as catalytic active sites and may promote charge transfer.

Accordingly, it was confirmed that the perovskite-based oxidation catalyst of the present invention may have excellent electrical conductivity and catalytic activity, and may also have very excellent durability due to its structural stability.

Due to such excellent overall physical properties of the oxidation catalyst, the perovskite-based oxidation catalyst may be very preferably applied to an anion exchange membrane water electrolysis system.

[DETAILED DESCRIPTION OF THE EMBODIMENTS]

In the present invention, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

Furter, in the present invention, when a layer or an element is mentioned to be formed "on" or "above" layers or elements, it means that each layer or element is directly formed on the layers or elements, or other layers or elements may be formed between the layers, subjects, or substrates.

The present invention may be variously modified and have various forms, and specific exemplary embodiments are exemplified and explained in detail below. However, it is not intended to limit the present invention to the specific exemplary embodiments and it must be understood that the present invention includes every modifications, equivalents, or replacements included in the spirit and technical scope of the present invention.

Hereinafter, an oxidation catalyst for anion exchange membrane water electrolysis and a preparation method thereof, and an anode including the oxidation catalyst and an anion exchange membrane water electrolysis system according to exemplary embodiments of the present invention will be described in detail.

According to one embodiment of the present invention, provided is a perovskite-based oxidation catalyst for anion exchange membrane water electrolysis, the oxidation catalyst including a perovskite-based oxide of the following Chemical Formula 1:

[Chemical Formula 1]    $La_{1-x}Sr_xCoO_{3-y}$

in Chemical Formula 1, $0 \leq x \leq 1$, and $0 \leq y \leq 0.3$.

The present inventors have continuously studied to develop an oxidation catalyst having excellent overall physical properties suitable for an anion exchange membrane water electrolysis system. As a result of the study, they found that the perovskite-based oxide of Chemical Formula 1 may be prepared and provided by using a co-precipitation method, for example, at a low temperature of 1000°C or lower.

Therefore, it was confirmed that during a high-temperature solid-state reaction process, agglomeration and growth of the oxide particles may be suppressed, and the perovskite-based oxide may be provided to have a smaller particle size and a uniform particle size distribution. Further, as the low-temperature preparation process using this co-precipitation method becomes possible, it is possible to prevent surface defects or oxygen vacancies, which may act as catalytic active sites in the lattice structure of the perovskite-based oxide, from being filled by high-temperature reactions. Therefore, the oxidation catalyst of one embodiment may exhibit a larger surface area and excellent oxidation catalytic activity.

In addition, it was confirmed that since the perovskite-based oxide contains two types of rare earth metal elements, lanthanum and strontium, it may be prepared and provided to have a plurality of oxygen vacancies in the lattice structure by adjusting a content molar ratio of these lanthanum and strontium. It is predicted that the creation of these oxygen vacancies is attributed to oxygen deficiency when lanthanum ions with an oxidation number of +3 are replaced by strontium ions with an oxidation number of +2. These oxygen vacancies in the lattice structure may act as catalytic active sites and may promote charge transfer, and thus the oxidation catalyst including the perovskite-based oxide of Chemical Formula 1 may exhibit excellent catalytic activity and electrical conductivity at the same time.

Additionally, it was also confirmed that the perovskite-based oxide has excellent durability by maintaining excellent electrical conductivity and activity even when operated within about 1000 cycles, because of having excellent structural stability.

As a result, since the oxidation catalyst of one embodiment includes the perovskite-based compound of Chemical Formula 1, it may be provided to exhibit excellent electrical conductivity, catalytic activity, and durability, and to have a large surface area, and therefore, it may be very preferably applied to an anion exchange membrane water electrolysis system and an anode thereof.

Meanwhile, in Chemical Formula 1, x may represent the content molar ratio of strontium, and y may represent the ratio of oxygen vacancies. In the oxide of Chemical Formula 1, oxygen vacancies may act as catalytic active sites and cocatalysts that facilitate the production of intermediate products in the oxygen evolution reaction of the following Reaction Scheme 1, which occurs at the anode of the water electrolysis system, and may promote charge transfer:

[Reaction Scheme 1]    $4OH^- \rightarrow O_2 + 2H_2O + 4e^-$

Therefore, in terms of excellent electrical conductivity and catalytic activity of the oxidation catalyst of one embodiment, y may have a value of more than 0, and may have the range of $0 < y \leq 0.3$ or $0.0001 \leq y \leq 0.1$. However, when the ratio of oxygen vacancies excessively increases, the structural stability of the oxidation catalyst may deteriorate.

The ratio of oxygen vacancies may be adjusted according to the temperature of the co-precipitation reaction during the preparation process of Chemical Formula 1 or the content molar ratio of strontium, etc. More specifically, in order to increase the ratio of oxygen vacancies, it is preferable to increase the ratio x at which lanthanum ions having an oxidation number of +3 are replaced by strontium ions having an oxidation number of +2. In this aspect, it is preferable that x has the range of $0.7 \leq x \leq 1$.

However, within the range of $0.8 \leq x \leq 1$, the oxide of Chemical Formula 1 may have a plate-like particle shape, and as the molar ratio of x increases, the particle size increases and the surface area of the oxidation catalyst may decrease. In this aspect, it is more preferable that x has the range of $0.7 \leq x \leq 0.9$.

The above-mentioned molar ratio of x, specifically, the molar ratio of lanthanum, strontium, and cobalt may be confirmed by elemental analysis of the oxidation catalyst by ICP, etc. or by XRD analysis, and the ratio y of the oxygen vacancies may be confirmed by XRD analysis of the oxidation catalyst.

Meanwhile, the perovskite-based oxide of Chemical Formula 1, which is included in the oxidation catalyst of one embodiment, may be in the form of spherical, irregular, or plate-like primary particles; or in the form of secondary particles in which the primary particles aggregate.

More specifically, the particle shape of the catalyst may be controlled by controlling the content molar ratio of lanthanum and strontium, or preparation conditions described later, etc. For example, when the molar ratio x of strontium is 0.6 or less, the perovskite-based oxide may be mainly prepared in the form of secondary particles in which spherical or irregular primary particles aggregate, and it was confirmed that the particle size decreases as x increases. On the contrary, when x increases to 0.8 or more, the perovskite-based oxide may be mainly prepared in the form of plate-like primary particles, and it was confirmed that particles agglomerate and particle size increases as x increases. This is expected to be because the crystal lattice structure changes as $Sr^{2+}$ ions (1.44 Å) with large ionic radii are substituted for $La^{3+}$ ions (1.36 Å).

In this case, the primary particles of the perovskite-based oxide may have a particle size of 10 nm to 3 $\mu$m. More specifically, the spherical or irregular primary particles which are mainly formed when x is 0.6 or less may have a particle size in the range of, for example, 10 nm to 400 nm, or 20 nm to 100 nm, and the plate-like primary particles may have a particle size of, for example, 400 nm to 3 $\mu$m, or 1 $\mu$m to 2 $\mu$m. In this regard, the "particle size" may be defined as the longest straight line distance among straight lines connecting arbitrary two points on the surface of each primary particle.

The perovskite-based oxide preferably has a particle size of 10 nm to 1.5 $\mu$m or 10 nm to 1 $\mu$m in terms of large surface area and catalytic activity, and preferably has a spherical shape or an irregular particle shape close to the spherical shape. In addition, the perovskite-based oxide may have a monodisperse particle size distribution by being prepared by a preparation method described later, and as a result, may have a more uniform particle size distribution and a larger surface area.

The above-mentioned particle size and particle size distribution may be confirmed by analyzing the oxidation catalyst using an electron microscope or using a general laser particle size analyzer.

Meanwhile, the above-described perovskite-based oxide may be applied as it is as the oxidation catalyst for anion exchange membrane water electrolysis, but may also be applied in a state in which a heterogeneous element is doped in a small amount. Due to the addition of such an additional dopant, the catalytic active sites are increased to further improve the activity as the oxidation catalyst of the oxide and electrical conductivity. The type of dopant that may be added is not particularly limited, and for example, one or more types of heterogeneous elements selected from the group consisting of Ba, Fe, Ni, and Mn may be doped.

As described above, the perovskite oxide having excellent catalytic activity and electrical conductivity and the large surface area may be prepared through a preparation method using a co-precipitation method. Accordingly, according to another embodiment of the present invention, the method of preparing the perovskite-based oxidation catalyst of one embodiment is applied.

The preparation method of another embodiment includes the steps of forming a catalyst precursor by performing co-precipitation of lanthanum, strontium, and cobalt salts in the presence of a chelating agent in an aqueous solvent having a pH of 12 or more; and

forming the perovskite-based oxide of Chemical Formula 1 by sintering the catalyst precursor at a temperature of 500°C or higher.

In the preparation method of another embodiment, it is possible to precisely control the atomic members of the catalyst precursor and the perovskite-based oxide at the atomic level by using the co-precipitation method. In addition, when this co-precipitation method is used, the particle size of the oxide particles may be controlled within a desired small range, and the oxide may be prepared to have a more uniform particle size distribution.

In addition, it was confirmed that when the co-precipitation method is used, it is possible to prepare the perovskite-based oxide and the oxidation catalyst by performing a low heat treatment around 500°C to 1000°C or 600°C to 900°C in the subsequent sintering step.

Through this, it is possible to suppress the decrease in the catalytic activity due to the increase in the surface area of the oxidation catalyst particles or the filling of surface defects or oxygen vacancies in the existing high-temperature solid-state reaction and heat treatment process. However, when the heat treatment temperature is excessively high, the particle size of the oxidation catalyst increases, the surface area decreases, and the catalytic active sites decrease, which may adversely affect the catalytic activity.

In addition, in the preparation method of another embodiment, since a metal acid addition salt having a relatively low unit price may be used as a reactant, the oxidation catalyst of one embodiment having excellent overall physical properties may be more economically prepared.

Meanwhile, in the preparation method of another embodiment, the aqueous solvent having a pH of 12 or more may be produced by treating a neutral aqueous solvent, for example, distilled water, with a plurality of pH adjusting agents in multiple steps.

According to a specific embodiment, the neutral aqueous solvent is treated with a first pH adjusting agent containing ammonium hydroxide or ammonium sulfate, and thus is maintained at pH 6 to 7, and then, treated with a second pH adjusting agent containing ammonium oxalate, potassium hydroxide, or sodium hydroxide to obtain an aqueous solvent having a pH of 13 or more, or 13.5 or more, or 13.5 to 14. By this multi-step process, it is possible to more precisely control the pH required for the co-precipitation method.

In the coprecipitation reaction step, the lanthanum and strontium salts may exist in various forms depending on the pH of the aqueous solvent. Specifically, the lanthanum salt may exist in the form of $La^{3+}$, $La(OH)^{2+}$,

$La(OH)_2^+$ $La(OH)_4^-$ or $La(OH)_3$ in the aqueous solvent, and the lanthanum salt may exist mainly in the form of $La(OH)^{2+}$, $La(OH)_2^+$, and $La(OH)_3$ at a pH of 6 or higher, and $La(OH)_4^-$ ion may be additionally generated at a pH of 9 or higher. In addition, the strontium salt may exist in the form of $Sr^{2+}$ in the aqueous solvent, and may precipitate in the form of $Sr^{2+} + OH^- \rightarrow SrOH^-$ at a pH of 12 or higher.

In other words, when the pH of the aqueous solvent in the coprecipitation reaction step is adjusted to the above-mentioned range of 12 or more, the existence form of these lanthanum and strontium salts is appropriately adjusted, and a co-precipitation reaction with a complex compound of cobalt described later occurs to obtain a catalyst precursor having an appropriate atomic composition.

In addition, in the co-precipitation reaction step, the chelating agent is used to more effectively obtain the catalyst precursor having a desired structure by controlling the reaction rate of the co-precipitation reaction. More specifically, the chelating agent may form a cobalt complex by first coordinating with the cobalt salt. As a result, this cobalt complex compound slowly reacts with the lanthanum and strontium salts to produce a catalyst precursor having a desired atomic composition, uniform particle size distribution and lattice structure according to the stoichiometric ratio, and an oxidation catalyst using the same.

The type of the chelating agent is not particularly limited, but an ammonium salt compound may be used in consideration of appropriate reactivity with the cobalt salt, and specific examples thereof may include one or more selected from the group consisting of ammonium hydroxide ($NH_4OH$), ammonium sulfate (($NH_4)_2SO_4$), and ammonium nitrate ($NH_4NO_3$), and monobasic ammonium phosphate (($NH_4)_2HPO_4$).

For example, when ammonium hydroxide is used as the chelating agent, the reaction between the chelating agent and the cobalt salt may proceed in two steps as summarized in the following Reaction Scheme 2:
[Reaction Scheme 2]

Step 1 $\quad M^{2+} + n NH_4OH \rightarrow [M(NH_3)_n]^{2+} + 2H_2O$

Step 2 $\quad [M(NH_3)_n]^{2+} + 2OH^- + n H_2O \rightarrow M(OH)_2 + n NH_4OH$

in Reaction Scheme 2, M includes Co.

Of them, in the step 1, primary particles having a nanoscale particle size may be formed, and in the step 2, the Ostwald ripening phenomenon occurs, and thus these primary particles agglomerate to form secondary particles having a roughly microscale particle size. As this cobalt complex compound is produced, this complex compound slowly react with lanthanum and strontium salts, and a catalyst precursor having a desired particle size range, a uniform particle size distribution, a controlled atomic composition and lattice structure may be prepared.

In this co-precipitation reaction step, $Co^{2+}$ ions may be oxidized to $Co^{3+}$ or $Co^{4+}$ in air. When this oxidation and phase transition occur, it is difficult to control the atomic composition, particle size, and particle size distribution according to the stoichiometric ratio of the catalyst precursor. Therefore, the co-precipitation reaction step is preferably performed under an atmosphere in which oxygen or air is blocked, or under an inert atmosphere.

Meanwhile, in the co-precipitation reaction step, the types of lanthanum, strontium, and cobalt salts are not particularly limited, and they may have a common salt form known to be applied in the co-precipitation reaction. However, in a more specific embodiment, the lanthanum, strontium, and cobalt salts may be in the form of acid addition salts such as nitrates, in which nitrate ions are bound to these metals, etc., or in the form of hydrates thereof.

In the preparation method of another embodiment as described above, since the catalyst precursor and the oxidation catalyst may be prepared using an acid addition salt having a relatively low unit price as a reactant, the economic feasibility and mass productivity of the overall oxidation catalyst preparation process may be improved.

In addition, in the co-precipitation reaction step, the catalyst precursor and the oxidation catalyst may be prepared by adjusting the atomic composition according to the stoichiometric ratio while controlling the rate of the co-precipitation reaction, as described above. Therefore, in the preparation method of another embodiment, when the lanthanum, strontium, and cobalt salts are co-precipitated, a molar ratio corresponding to the molar ratio of respective metals included in the oxidation catalyst, i.e., the molar ratio of lanthanum salt: strontium salt: cobalt salt may be a molar equivalent ratio of 1-x : x : 1 ($0 \leq x \leq 1$).

In addition, in order to generate the complex of cobalt in an appropriate ratio and to preferably control the reaction rate using the above-described chelating agent, the chelating agent is preferably used such that the ratio of the concentration of the chelating agent to the total concentration of the metal salt, i.e., the ratio of the concentration of the metal salt: the concentration of the chelating agent satisfies 1 : 0.6 to 1 : 6, or 1 : 0.7 to 1 : 3, or 1 : 0.8 to 1 : 1.2.

On the other hand, as described above, this co-precipitation reaction step may be carried out under an oxygen or air-blocking atmosphere or under an inert atmosphere such as nitrogen gas, etc., and for appropriate control of the reaction rate, the co-precipitation reaction step may be carried out, for example, at a temperature of 20°C to 100°C, or 50°C to 80°C.

Through the above co-precipitation reaction step, the catalyst precursor containing respective metal elements with the desired atomic composition may be prepared. This catalyst precursor may be in the form of a hydroxide compound containing the respective metal elements of cobalt, lanthanum, and strontium in the same molar ratio as in the oxidation catalyst to be produced in the subsequent step. More specifically, the catalyst precursor may be prepared in the form of particles containing a compound of $La_{1-x}Sr_xCo(OH)_2$ ($0{\leq}x{\leq}1$).

On the other hand, after the co-precipitation reaction step, the step of drying the catalyst precursor at a temperature of 50°C or higher, or 50°C to 100°C, or 60 to 90°C may be further performed, as needed. Before such a drying step, the step of washing the catalyst precursor once or more, or once to three times using water such as distilled water, etc., or alcohol such as ethanol, etc. may be further performed.

After preparing the catalyst precursor through the above-described process, the catalyst precursor is sintered, for example, under an air atmosphere, at a temperature of 500°C or higher, or 500°C to 1000°C, or 600°C to 900°C, thereby preparing the oxidation catalyst of one embodiment.

However, as described above, when the sintering temperature is excessively high, the particle size of the oxidation catalyst may increase and its surface area may decrease, and the catalytic active site may be filled, which may adversely affect the activity of the oxidation catalyst, etc.

Through the above process, the oxidation catalyst for anion exchange membrane water electrolysis of one embodiment, exhibiting a large surface area, excellent catalytic activity and electrical conductivity, and excellent durability, may be economically and efficiently prepared. This oxidation catalyst may be preferably used in an anode for an anion exchange membrane water electrolysis system according to the excellent overall physical properties described above.

This anode may follow the configuration of a general anode for an anion exchange membrane water electrolysis system, except for including the oxidation catalyst of one embodiment. For example, this oxidation catalyst may consist of a porous metallic structure; and a catalyst layer including the perovskite-based oxidation catalyst of one embodiment, which is formed on the porous metallic structure.

In addition, the porous metallic structure may include a nickel metal, and specifically, may include a nickel foam, which is a porous structure of nickel metal.

In addition, on one side of the porous metallic structure, the oxidation catalyst may be included in an amount of 0.1 $mg/cm^2$ to 10 $mg/cm^2$ per unit area of the porous metallic structure, and the oxidation catalyst may be included in the pores of the metallic structure.

Within the above range, as the content of the oxidation catalyst increases, the performance of the anion exchange membrane water electrolysis system may be improved. However, when the content of the oxidation catalyst is excessively increased, the performance of the water electrolysis system may rather decrease.

The formation thickness of the catalyst layer including the oxidation catalyst may increase in proportion to the content of the oxidation catalyst, and is not particularly limited.

On the other hand, as the porous metallic structure, commercially available nickel foam (Ni foam) may be used, and its porosity may be 50 PPI to 200 PPI (Pores per inch), specifically, 70 PPI to 170 PPI, for example, 110 PPI.

In addition, the thickness of the porous metallic structure may be 150 $\mu$m to 350 $\mu$m, specifically, 200 $\mu$m to 300 $\mu$m, for example, 250 $\mu$m.

Since the above-described anode may be manufactured according to a general method of manufacturing an anode for an anion exchange membrane water electrolysis system, except for using the oxidation catalyst of one embodiment, and additional description thereof will be omitted.

According to still another embodiment of the present invention, provided is an anion exchange membrane water electrolysis system including the anode. Such a water electrolysis system may consist of an anion exchange membrane; a cathode placed on one side of the anion exchange membrane; and the anode of another embodiment, which is placed on the other side of the anion exchange membrane such that the catalyst layer is brought into contact with the anion exchange membrane.

This may be an anion exchange membrane water electrolysis system having improved water electrolysis performances by including the oxidation catalyst and anode of the above-described embodiment.

Hereinafter, description of the anode described above will be omitted, and other components will be described in detail.

The water electrolysis system of one embodiment may include a potentiostat connected to the cathode and the anode, respectively.

As the anode, the above-described anode of one embodiment is used, and as the cathode, a composite coating of platinum (Pt) and carbon (C) on carbon paper may be used.

Such a water electrolysis system may include only one cell including the anode and the cathode, and the anion exchange membrane, but may include a plurality of such cells, and a water electrolysis stack may be configured by stacking these cells in series.

The water electrolysis stack may include an electrolyte tank, and the electrolyte tank may serve to store an aqueous alkali solution such as potassium hydroxide (KOH) or sodium hydroxide (NaOH), etc. and to supply the aqueous alkali solution to the anion exchange membrane.

When the aqueous alkali solution is supplied from the electrolyte tank to the anion exchange membrane, and DC power is applied to the anode and the cathode, hydroxide ions (OH-), which are decomposition products of the aqueous alkali solution in the anion exchange membrane, generate oxygen, water, and electrons by a catalytic reaction on the surface of the anode, and electrons may move to the cathode along the external conducting wire. On the surface of the cathode, electrons and water are subjected to a catalytic reaction to generate hydrogen and hydroxide ions (OH-). Oxygen generated from the anode and hydrogen generated from the cathode may be transferred to and stored in a storage tank outside the unit cell, respectively.

Other matters may be implemented with reference to a water electrolysis system widely known in the art.

Hereinafter, preferred exemplary embodiments are provided for better understanding of the present invention. However, the following exemplary embodiments are only for illustrating the present invention, and the present invention is not limited thereto.

**Examples 1 to 10: Preparation of oxidation catalysts of Chemical Formula 1 ($La_{1-x}Sr_xCoO_{3-y}$)**

First, a reactor was filled with 1 l to 4 l of distilled water (DIW), an aqueous ammonia solution (ammonium hydroxide) was added as a first pH adjusting agent, and then agitated at 600 rpm or more to maintain the internal pH of the reactor at 7 and the internal temperature from room temperature to 60°C. A NaOH solution was added as a second pH adjusting agent to maintain the internal pH of the reactor at 13.5 or higher.

Thereafter, an aqueous ammonium hydroxide solution ($NH_4OH$) was mixed as a chelating agent. Subsequently, an aqueous metal solution prepared at a molar ratio of 1-x: x: 1 was prepared as a raw material by controlling a molar ratio of lanthanum salt: strontium salt: cobalt salt. At this time, $La(NO_3)_3$, $Sr(NO_3)_2$, and $Co(NO_3)_2$ were used as the respective metal salts and dissolved in distilled water. Further, in Examples 1 to 10, the molar ratio of x was varied as described in the composition of Table 1 below. A mixture of the aqueous metal solution thus prepared and NaOH and $NH_4OH$ was introduced into the reactor using a metering pump. Next, a co-precipitation reaction was carried out in the reactor under agitating at an agitation speed of 600 rpm to 1,000 rpm. At this time, the molar ratio was adjusted to metal ion: aqueous ammonium hydroxide solution (as the chelating agent) = 1:0.7 to 1:6. The co-precipitation reaction time was carried out for 4 hours or more. After the co-precipitation reaction, the precipitate was separated using a centrifuge and washed with distilled water (DIW) and ethanol, respectively. Then, it was dried in an oven at 80°C for 12 hours.

Thereafter, oxidation catalysts containing perovskite oxide of Chemical Formula 1 of Examples 1 to 10 were each prepared by sintering under an air atmosphere under the conditions described in Table 1 below.

[Table 1]

| | Composition of oxidation catalyst of Chemical Formula 1 | Synthesis conditions (pH/co-precipitation reaction temperature/ reaction time) | Conditions (sintering conditions) |
|---|---|---|---|
| Example 1 | $LaCoO_3$ | 14 / RT / 4 hr | Maintained at 700°C for 6 hr |
| Example 2 | $La_{0.8}Sr_{0.2}CoO_3$ | 14 / RT / 4 hr | Maintained at 700°C for 6 hr |
| Example 3 | $La_{0.6}Sr_{0.4}CoO_3$ | 14 / RT / 4 hr | Maintained at 700°C for 6 hr |
| Example 4 | $La_{0.4}Sr_{0.6}CoO_3$ | 14 / RT / 4 hr | Maintained at 700°C for 6 hr |
| Example 5 | $La_{0.2}Sr_{0.8}CoO_3$ | 14 / RT / 4 hr | Maintained at 700°C for 6 hr |
| Example 6 | $SrCoO_3$ | 14 / RT / 4 hr | Maintained at 700°C for 6 hr |
| Example 7 | $SrCoO_3$ | 14 / RT / 4 hr | Maintained at 600°C for 6 hr |

(continued)

|  | Composition of oxidation catalyst of Chemical Formula 1 | Synthesis conditions (pH/co-precipitation reaction temperature/ reaction time) | Conditions (sintering conditions) |
|---|---|---|---|
| Example 8 | $SrCoO_3$ | 14 / RT / 4 hr | Maintained at 800°C for 6 hr |
| Example 9 | $SrCoO_3$ | 14 / RT / 4 hr | Maintained at 900°C for 6 hr |
| Example 10 | $SrCoO_3$ | 14 / RT / 4 hr | Maintained at 1000°C for 6 hr |

**<Experimental Example 1> Measurement of SEM image**

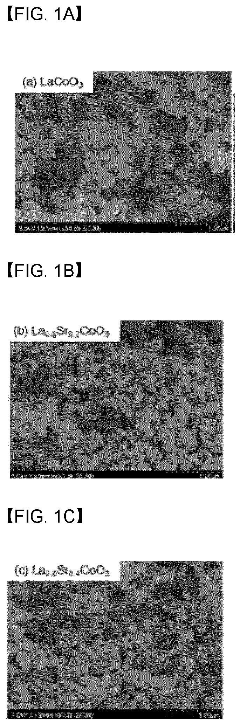

First, the oxidation catalysts of Examples 1 to 6, each having a different mole ratio x of strontium, were analyzed with an electron microscope (SEM), and images are shown in FIGS. 1A to 1F, respectively.

Referring to FIGS. 1A to 1F, as the Sr molar ratio x increased, the particle size of oxidation catalyst particles significantly decreased. However, when x is in the range of 0.8 or more and 1 or less, as x increased, plate-like particles were produced and the particle size increased. More specifically, in the oxidation catalyst of Example 1, spherical or irregular primary particles with a particle size of 100 nm or less aggregated, and as the Sr content increased, the size of primary particles decreased to several tens of nm. It was confirmed that when x is 0.8 or more, plate-like particles having a micro-scale particle size (e.g., a particle size of 1 $\mu$m or more) grew. Specifically, the oxidation catalyst of Example 6 was mostly composed of plate-like particles, which is expected to be attributed to change in the lattice structure by complete substitution of $Sr^{2+}$ ions (1.44 Å) with large ionic radii for $La^{3+}$ ions (1.36 Å).

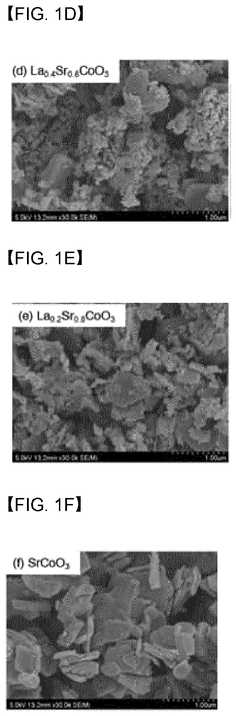

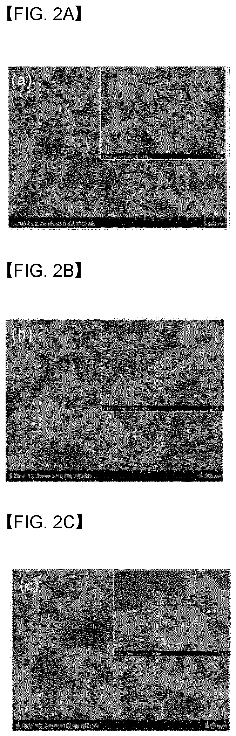

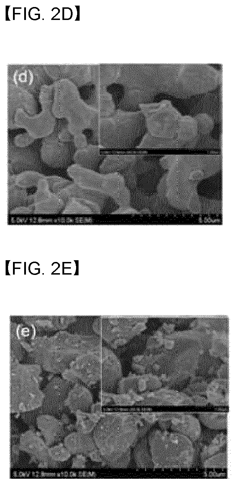

On the other hand, the oxidation catalysts of Examples 6 to 10 with different sintering temperatures were analyzed with an electron microscope (SEM), and images are shown in FIGS. 2A to 2E (FIG. 2A: Example 7, FIG. 2B: Example 6, FIGS. 2C to 2E: Examples 8 to 10; sorted by increasing sintering temperature). At this time, FIGS. 1 and 2 show electron microscope images of different scales, and FIGS. 1F and 2B are shown in different scales for Example 6, respectively.

Referring to FIGS. 2A to 2E, it was confirmed that the particle size of the oxidation catalyst particles increased as the sintering temperature increased. In particular, it was confirmed that, at a sintering temperature higher than 900°C, particle aggregation of the oxidation catalyst with the form of plate-like particles occurred, resulting in a rapid increase in the particle size. Therefore, when the sintering temperature is too high, the particle size increases and the surface area decreases, which is disadvantageous in terms of catalytic activity.

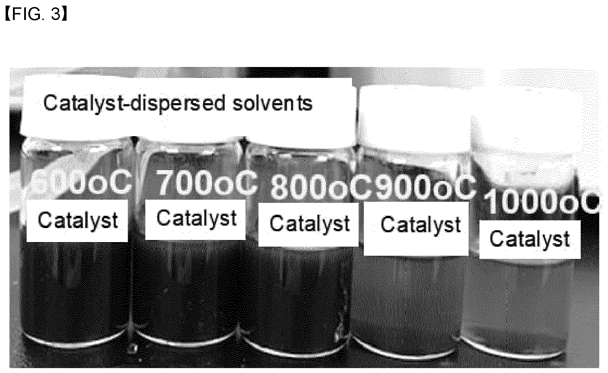

In addition, as a result of dispersing the oxidation catalysts of Examples 6 to 10 in a solvent (distilled water), respectively, as shown in FIG. 3, as the sintering temperature increased, the dispersion of the oxidation catalyst decreased, which is unsuitable.

**<Experimental Example 2> XRD analysis**

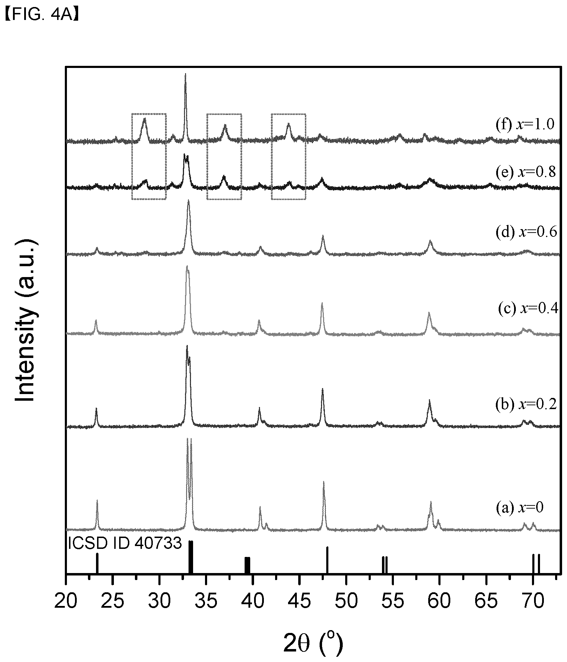

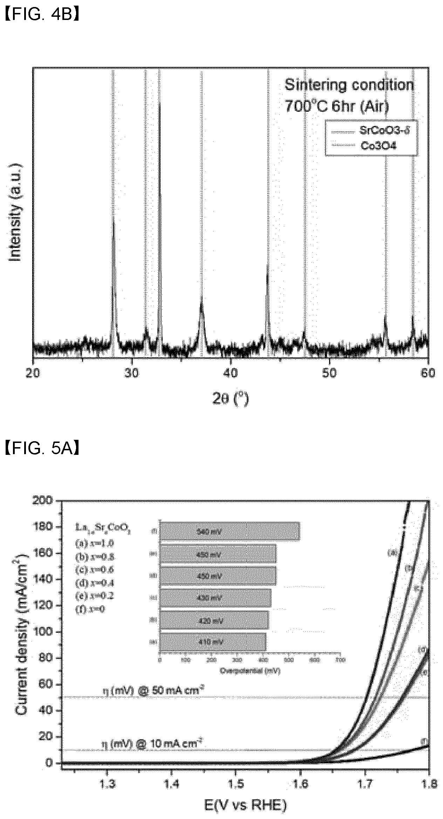

The oxidation catalysts of Examples 1 to 6 were analyzed by XRD, and their XRD spectra were compared and shown in FIG. 4A. In addition, in order to analyze the crystal structure of the oxidation catalyst of Example 6, the XRD spectrum is enlarged and shown in FIG. 4B.

Referring to FIG. 4A, as the molar ratio x of strontium increased, XRD peaks moved to a low angle. In addition, it was confirmed that the oxidation catalysts of Examples 1 to 4, where x was 0.6 or less, had a trigonal structure (twisted cubic), and the oxidation catalysts of Examples 5 and 7, where x was 0.8 or more, had the lattice structure with oxygen vacancies.

In addition, referring to FIG. 4B, the oxidation catalyst of Example 6 was confirmed to have a hexagonal $SrCoO_{3-y}$ structure with oxygen vacancies [Reference: Zeitschrift für Naturforschung B | Volume 63: Issue 6]. It is predicted that the oxygen vacancies are attributed to oxygen deficiency when lanthanum ions with an oxidation number of +3 are replaced by strontium ions with an oxidation number of +2.

**<Experimental Example 3> Evaluation of electrochemical characteristics (measurement of current density vs voltage)**

First, the results of evaluating the electrochemical characteristics of the oxidation catalysts prepared in Examples 1 to 6 are shown in FIG. 5A.

More specifically, the LSV (Linear sweep voltage) graph of measuring the current density (mA/cm$^2$) of the oxidation catalysts of Examples 1 to 6 in a voltage range of 1.2 V to 1.8 V and the overpotential (mV) at a current density of 10 mA/cm$^2$ are shown in FIG. 5A.

Referring to FIG. 5A, it was confirmed that the current density increased at the same voltage because the electrical conductivity increased as the molar ratio x of Sr increased.

In addition, the overpotential at a current density of 10 mA/cm$^2$ or 50 mA/cm$^2$ was measured in the following manner, respectively.

Measurement was performed using a counter electrode (Pt) and a reference electrode (Hg/HgO). The catalyst was applied to a glass carbon electrode (3 mm in diameter) and used as a working electrode. The working electrode was subjected to sonication (30 min) to prepare a uniform catalyst solution by injecting 5 mg to 10 mg of the catalyst particles into a solution, in which 20 $\mu$L of 5% Nafion solution was dissolved in 1 mL (ethanol: isopropanol=4:1 (v: v)). 10 $\mu$L of the solution was loaded on the glassy carbon electrode (Loading mass: 0.05 mg/cm$^2$). A polarization curve was measured at 5 mV/s to 10 mV/s (1.0 M KOH solution). Initial data were IR corrected.

As a result of the measurement, it was confirmed that the catalyst of Example 5 showed the overpotential of 420 mV at a current density of 10 mA/cm$^2$ and the overpotential of 486 mV at a current density of 50 mA/cm$^2$. In contrast, it was confirmed that the catalyst of Example 6 showed the overpotential of 410 mV at a current density of 10 mA/cm$^2$ and the overpotential of 470 mV at a current density of 50 mA/cm$^2$. These results indicate that the electrical conductivity and activity of the catalyst were improved, as x increased.

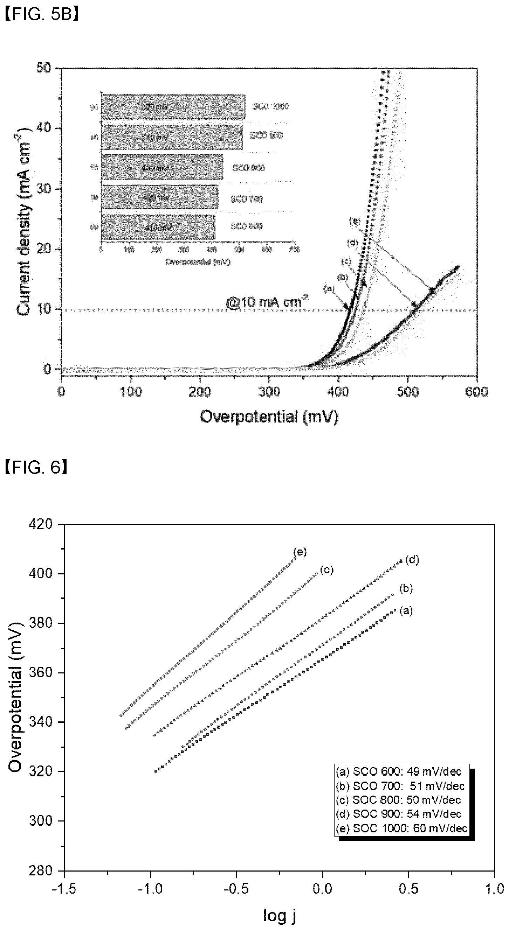

Meanwhile, electrochemical characteristics were evaluated for the oxidation catalysts of Examples 6 to 10 having different sintering temperatures in the same manner as in FIG. 5A, and the evaluation results are shown in FIG. 5B. Specifically, FIG. 5B shows an LSV graph of measuring a current density (mA/cm$^2$) of the oxidation catalysts of Examples 6 to 10 in the voltage range of 1.2 V to 1.8 V, and the results of measuring the overpotential (mV) at a current density of 10 mA/cm$^2$.

Referring to FIG. 5B, it was confirmed that as the sintering temperature increased, the overpotential increased at a constant current density, and the electrical conductivity and the catalytic activity decreased. Specifically, it was confirmed that the catalyst of Example 7 (sintering temperature: 600°C) showed the overpotential of 410 mV at a current density of 10 mA/cm$^2$, and the overpotential of the catalyst of Example 10 (sintering temperature: 1000°C) increased to 520 mV. This is expected to be because the surface area decreases due to particle aggregation (sintering effect) as the sintering temperature increases, and thus the catalytic active sites decrease.

## <Experimental Example 4> Evaluation of electrochemical characteristics (Tafel slope)

The results of measuring the Tafel slope for the catalysts of Examples 6 to 10 are shown in FIG. 6.

The Tafel slope means the voltage change required for a tenfold current increase, and as the Tafel slope is smaller, the more current flows even at a low voltage, indicating excellent electrical conductivity.

Referring to FIG. 6, as the sintering temperature increased, the Tafel slope increased from 49 mV/dec to 60 mV/dec, confirming that the electrical conductivity of the oxidation catalyst decreased.

For reference, the oxygen evolution reaction (OER) at the anode follows the following mechanism.

$$M + OH^- \leftrightarrow MOH + e^-, \ b = 120 \ mV \ dec^{-1}$$
$$MOH + OH^- \leftrightarrow MO^- + H_2O, \ b = 60 \ mV \ dec^{-1}$$
$$MO^- \rightarrow MO + e^-, \ b = 45 \ mV \ dec^{-1}$$
$$2MO \rightarrow 2M + O_2, \ b = 19 \ mV \ dec^{-1}$$

The above mechanism indicates that the reaction rate determining step changes, as the sintering temperature increases. Under the sintering condition of 600°C (Example 7), the Tafel slope was 49 mV dec$^{-1}$, and the reaction rate determination step follows $MO^- \rightarrow MO + e^-$. At 1000°C (Example 10), the reaction rate determining step of the catalyst follows $MOH + OH^- \leftrightarrow MO^- + H_2O$. This is expected to be because the catalyst surface state changes depending on the sintering temperature.

## <Experimental Example 5> Evaluation of electrochemical characteristics (Impedance)

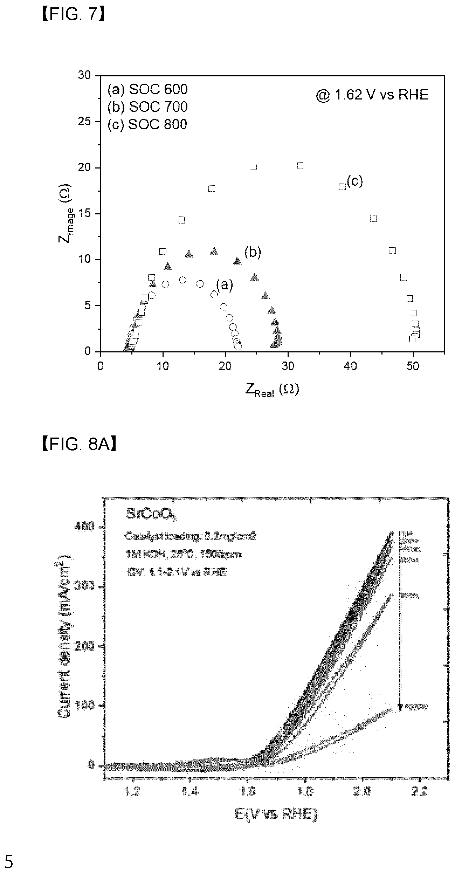

The results of measuring impedance of the oxidation catalysts of Examples 6 to 8 at 1.62 V are shown in FIG. 7. These are the evaluation results for measuring the charge transfer resistance of the oxidation catalysts.

Referring to FIG. 7, the charge transfer resistance increased, as the sintering temperature increased. This is expected to be because, when the sintering temperature increases, the particles aggregate and grow, and thus the surface area decreases, and when the catalyst surface area decreases, the active sites decrease, leading to the decrease in the catalytic activity.

In addition, when the sintering temperature increases under atmospheric conditions, the internal energy of the catalyst particles increases, and thus they easily move to the catalyst surface to fill the surface defects, and as a result, defects are reduced. Catalyst surface defects are classified as oxygen vacancies or defects caused by impurities. However, as the sintering temperature increases, oxygen vacancies or defects caused by impurities decreases. Electrons easily move to the surface oxygen vacancies, but when defects are reduced, the electron moving path is restricted, and therefore, the charge transfer resistance tends to increase.

**<Experimental Example 6> Evaluation of catalyst durability**

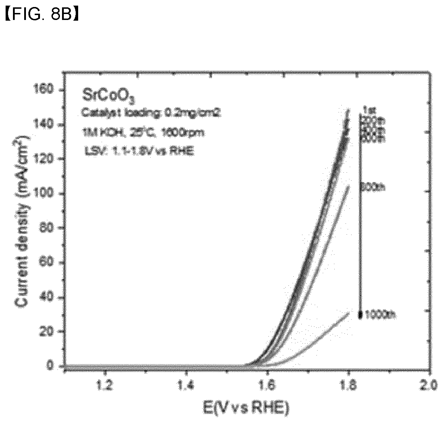

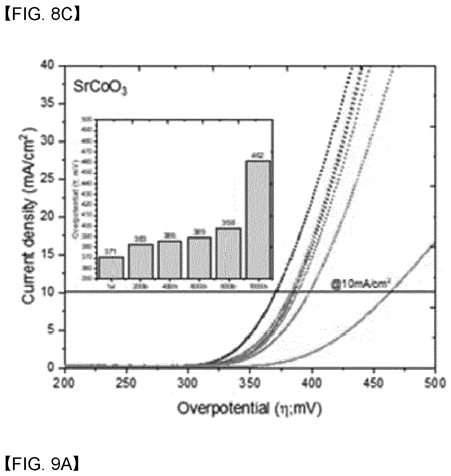

In order to evaluate the durability of the oxidation catalyst prepared in Example 7, the evaluation results after operating for 1000 cycles in the voltage range (1.1 V to 2.1 V) by CV (Cyclic voltammetry), and the results of measuring the current density after operating for 1000 cycles in the voltage range (1.1 V to 1.8 V) by LSV (Linear sweep voltage), and the results of measuring the overpotential are shown in FIGS. 8A to 8C, respectively.

Referring to FIGS. 8A to 8C, the catalyst of Example 7 was stable up to 800th cycles, prior to desorption of the catalyst due to bubbles, indicating excellent structural stability and durability.

**<Experimental Example 7> Evaluation of characteristics of anion exchange membrane water electrolysis system**

An anion exchange membrane water electrolysis system including an anion exchange membrane; a cathode placed on one side of the anion exchange membrane; and an anode including the oxidation catalyst, which is placed on the other side of the anion exchange membrane such that the catalyst layer is brought into contact with the anion exchange membrane, was manufactured using the oxidation catalyst of Example 7.

For the manufacture thereof, the ink composition for coating the catalyst of Example 7 was first prepared by dissolving the catalyst in an amount of about 1 wt% in a mixed solvent of 90 wt% of IPA and 10 wt% of DIW using a sonication method. In addition, a FUMATECH's product as an ionomer was added to this composition in an amount of 30 wt% with respect to the catalyst.

Then, a nickel foam with a porosity of 110 PPI and a thickness of 250 $\mu$m was placed on a hot plate at 80°C. A catalyst layer was formed by evenly spraying the ink composition on the surface of the nickel foam. At this time, an anode with the catalyst layer loading of 2.0 mg/cm$^2$ per unit area of the nickel foam was manufactured, and together with this anode, a cathode of Pt/C (Pt 40wt%) and FUMATECH's FAA-3-50 anion exchange membrane were used to manufacture an anion exchange membrane water electrolysis cell.

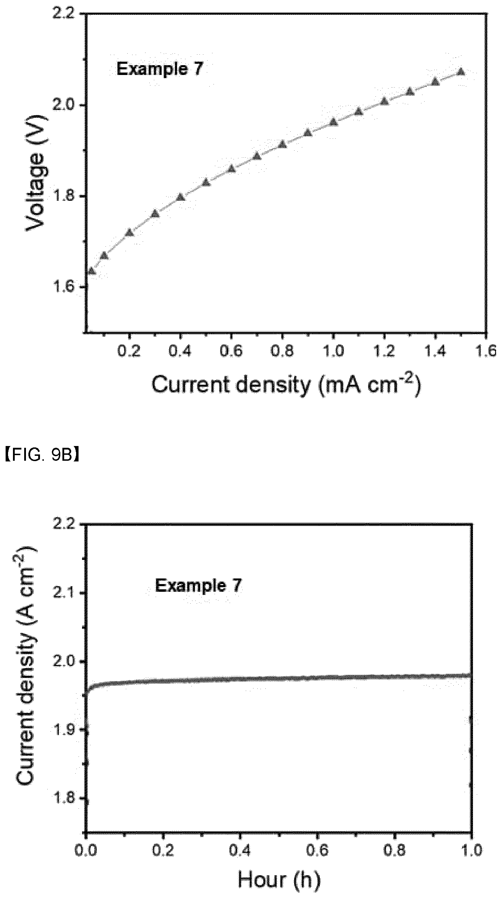

The results of measuring the current density of the water electrolysis cell while increasing the voltage are shown in FIGS. 9A and 9B, respectively. Referring to these figures, Example 7 showed a voltage of 1.95 V at a current density of 1 A/cm$^2$.

These results indicate that the oxidation catalyst of Example 7 exhibits excellent characteristics in the anion exchange membrane water electrolysis system.

**Claims**

1. A perovskite-based oxidation catalyst for anion exchange membrane water electrolysis, the perovskite-based oxidation catalyst comprising a perovskite-based oxide of the following Chemical Formula 1:

$$[Chemical\ Formula\ 1]\qquad La_{1-x}Sr_xCoO_{3-y}$$

   in Chemical Formula 1, $0 \leq x \leq 1$ and $0 \leq y \leq 0.3$.

2. The perovskite-based oxidation catalyst for anion exchange membrane water electrolysis of claim 1, wherein $0.7 \leq x \leq 1$ and $0 < y \leq 0.3$.

3. The perovskite-based oxidation catalyst for anion exchange membrane water electrolysis of claim 1, wherein the perovskite-based oxide is in the form of spherical, irregular, or plate-like primary particles; or in the form of secondary particles in which the primary particles aggregate.

4. The perovskite-based oxidation catalyst for anion exchange membrane water electrolysis of claim 3, wherein primary particles of the perovskite-based oxide have a particle size of 10 nm to 3 $\mu$m and a monodisperse particle size distribution.

5. The perovskite-based oxidation catalyst for anion exchange membrane water electrolysis of claim 1, further comprising one or more heterogeneous elements selected from the group consisting of Ba, Fe, Ni, and Mn, which are doped on the perovskite-based oxide.

6. A method of preparing the perovskite-based oxidation catalyst of claim 1, the method comprising the steps of:

forming a catalyst precursor by performing co-precipitation of lanthanum, strontium, and cobalt salts in the presence of a chelating agent in an aqueous solvent having a pH of 12 or more; and
forming the perovskite-based oxide of Chemical Formula 1 by sintering the catalyst precursor at a temperature of 500°C or higher.

7. The method of claim 6, wherein the aqueous solvent having a pH of 13 or more is prepared by sequentially adding, to the aqueous solvent, a first pH adjusting agent containing ammonium hydroxide or ammonium sulfate, and a second pH adjusting agent containing ammonium oxalate, potassium hydroxide, or sodium hydroxide.

8. The method of claim 6, wherein the chelating agent includes one or more selected from the group consisting of ammonium hydroxide ($NH_4OH$), ammonium sulfate ($(NH_4)_2SO_4$), ammonium nitrate ($NH_4NO_3$), and monobasic ammonium phosphate ($(NH_4)_2HPO_4$).

9. The method of claim 6, wherein the lanthanum, strontium, and cobalt salts are co-precipitated at a molar equivalent ratio of 1-x : x : 1 ($0 \leq x \leq 1$).

10. The method of claim 6, wherein the lanthanum, strontium, and cobalt salts are in the form of an acid addition salt of each metal or in the form of a hydrate thereof.

11. The method of claim 6, wherein the co-precipitation reaction step is performed under an inert atmosphere at a temperature of 20°C to 100°C.

12. The method of claim 6, wherein the catalyst precursor includes a compound of $La_{1-x}Sr_xCo(OH)_2$ ($0 \leq x \leq 1$).

13. The method of claim 6, further comprising the step of drying the catalyst precursor at a temperature of 50°C or higher, after the co-precipitation reaction step.

14. The method of claim 6, wherein the sintering step is performed under an air atmosphere at a temperature of 600°C to 900°C.

15. An anode for anion exchange membrane water electrolysis, the anode comprising:

a porous metallic structure; and
a catalyst layer including the perovskite-based oxidation catalyst of claim 1, which is formed on the porous metallic structure.

16. The anode of claim 15, wherein the porous metallic structure includes a Ni foam.

17. The anode of claim 15, wherein the oxidation catalyst is included in an amount of 0.1 $mg/cm^2$ to 10 $mg/cm^2$ per unit area of the porous metallic structure.

18. An anion exchange membrane water electrolysis system comprising:

an anion exchange membrane;
a cathode placed on one side of the anion exchange membrane; and
the anode of claim 15 which is placed on the other side of the anion exchange membrane such that the catalyst layer is brought into contact with the anion exchange membrane.

【FIG. 1A】

(a) LaCoO$_3$

【FIG. 1B】

(b) La$_{0.8}$Sr$_{0.2}$CoO$_3$

【FIG. 1C】

(c) La$_{0.6}$Sr$_{0.4}$CoO$_3$

【FIG. 1D】

(d) $La_{0.4}Sr_{0.6}CoO_3$

【FIG. 1E】

(e) $La_{0.2}Sr_{0.8}CoO_3$

【FIG. 1F】

(f) $SrCoO_3$

【FIG. 2A】

【FIG. 2B】

【FIG. 2C】

【FIG. 2D】

【FIG. 2E】

【FIG. 3】

【FIG. 4A】

【FIG. 4B】

【FIG. 5A】

【FIG. 5B】

【FIG. 6】

【FIG. 7】

【FIG. 8A】

【FIG. 8B】

【FIG. 8C】

【FIG. 9A】

【FIG. 9B】

## INTERNATIONAL SEARCH REPORT

| International application No. |
| --- |
| **PCT/KR2021/017252** |

**A. CLASSIFICATION OF SUBJECT MATTER**

**B01J 23/00**(2006.01)i; **B01J 23/10**(2006.01)i; **B01J 23/75**(2006.01)i; **B01J 35/02**(2006.01)i; **B01J 35/10**(2006.01)i; **B01J 35/00**(2006.01)i; **B01J 37/03**(2006.01)i; **B01J 37/08**(2006.01)i; **B01J 37/00**(2006.01)i

According to International Patent Classification (IPC) or to both national classification and IPC

**B. FIELDS SEARCHED**

Minimum documentation searched (classification system followed by classification symbols)

B01J 23/00(2006.01); C25B 13/08(2006.01); C25B 15/00(2006.01); H01M 8/124(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음이온 교환막 수전해(anion exchange membrane water electrolysis), 페로브스카이트(perovskite), 촉매(catalyst), 공침법(co-precipitation)

**C. DOCUMENTS CONSIDERED TO BE RELEVANT**

| Category* | Citation of document, with indication, where appropriate, of the relevant passages | Relevant to claim No. |
| --- | --- | --- |
| X <br> Y | MEFFORD, J. T. et al. Water electrolysis on La1-xSrxCoO3-d perovskite electrocatalysts. Nature communications. 2016, vol. 7, no. 1, pp. 1-11. <br> See pages 1-10; and table 1. | 1-4,6-14 <br> 5,15-18 |
| Y | GRICE, S. C. et al. Electronic Structure and Reactivity of TM-Doped La1-xSrxCoO3 (TM=Ni, Fe) Heterogeneous Catalysts. International Journal of Molecular Sciences. 2001, vol. 2, no. 5, pp. 197-210. <br> See abstract; and pages 198 and 208-209. | 5 |
| Y | 장명제 등. 음이온 교환막 알칼리 수전해를 위한 운전 조건 및 구성요소의 최적화. 한국표면공학회지. 2016, vol. 49, no. 2, pp. 159-165 (JANG, Myeong Je et al. Optimization of Operating Parameters and Components for Water Electrolysis Using Anion Exchange Membrane. Journal of the Korean Institute of Surface Engineering.) <br> See page 160. | 15-18 |
| A | KR 10-1940668 B1 (KOREA INSTITUTE OF SCIENCE AND TECHNOLOGY) 22 January 2019 (2019-01-22) <br> See entire document. | 1-18 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 March 2022** | **14 March 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/017252**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2020-0110588 A (KOREA INSTITUTE OF CERAMIC ENGINEERING AND TECHNOLOGY) 24 September 2020 (2020-09-24) See entire document. | 1-18 |

Form PCT/ISA/210 (second sheet) (July 2019)

## INTERNATIONAL SEARCH REPORT
### Information on patent family members

International application No.

**PCT/KR2021/017252**

| Patent document cited in search report | | | Publication date (day/month/year) | Patent family member(s) | | | Publication date (day/month/year) |
|---|---|---|---|---|---|---|---|
| KR | 10-1940668 | B1 | 22 January 2019 | KR 10-2018-0128562 | | A | 04 December 2018 |
| KR | 10-2020-0110588 | A | 24 September 2020 | KR | 10-2220265 | B1 | 25 February 2021 |

Form PCT/ISA/210 (patent family annex) (July 2019)

**EP 4 252 904 A1**

**Patent documents cited in the description**

- KR 1020200158897